# EUROPEAN PATENT APPLICATION

(11) **EP 2 803 855 A1**
(43) Date of publication of application: **19.11.2014**
(21) Application number: 13168046.4
(22) Date of filing: 16.05.2013
(51) Int. Cl.: F03D 11/00, H02K 9/19

(54) **Cooling system with two bridged cooling circuits, wind turbine with such a cooling system**

(71) Applicant: Siemens Aktiengesellschaft, 80333 München (DE)
(72) Inventor: Wang, Alex Yundong, 7400 Herning (DK)

(57) **Abstract**

It is described a cooling system (250) for cooling a first and a second heat generating device. The cooling system comprises a first cooling circuit (260) comprising a first looped fluid pipe (262) extending between a first inlet (262b) and a first outlet terminal (262a), a first fluid pump (266) being configured for circulating heat transfer fluid within the first looped fluid pipe (262) in a first direction (266a), and a first heat exchanger (264) being connected within the first looped fluid pipe and being configured for transferring heat from the heat transfer fluid to a first surrounding of the first heat exchanger. The cooling system further comprises a second cooling circuit (280) comprising a second looped fluid pipe (282) extending between a second inlet (282b) and a second outlet terminal (282a), a second fluid pump (286) being configured for circulating heat transfer fluid within the second looped fluid pipe in a second direction (286a), and a second heat exchanger (284) being connected within the second looped fluid pipe and being configured for transferring heat from the heat transfer fluid to a second surrounding of the second heat exchanger (284). Further, the cooling system comprises a first fluid pipe bridge (292) connecting a first downstream branch-off terminal (263a) of the first looped fluid pipe with a second downstream branch-off terminal (283a) of the second looped fluid pipe and a second fluid pipe bridge (294) connecting a first upstream branch-off terminal (263b) of the first looped fluid pipe with a second upstream branch-off terminal (283b) of the second looped fluid pipe. It is further described a wind turbine comprising such a cooling system.

## Description

### Field of invention

The present invention relates to the technical field of a cooling system which is used for cooling two different heat generating devices. Further, the present invention relates to a wind turbine with such a cooling system.

### Art Background

Wind turbines are used to convert (mechanical) wind energy into electrical energy in a clean and efficient way. In a wind turbine a rotor comprising rotor blades drives an electric generator, either directly or by means of a gearbox. The alternating current (AC) frequency that is developed at stator terminals of the electric generator is directly proportional to the speed of rotation of the rotor. For forwarding the generated electric energy to a power grid it is necessary to convert the frequency of the AC current produced by the generator into the frequency of the power grid. This conversion is usually accomplished by a voltage source converter, which firstly converts the generated AC current into a DC power signal and which secondly converts the DC power signal into the an AC power signal having the frequency of the power grid. Such a converter is usually a full bridge converter having a plurality of semiconductor switches.

Both the generator and the converter are power electric heat generating devices which under usual operation require a cooling in order to prevent an overheating.

There may be a need for providing a cooling system, in particular for two heat generating devices of a wind turbine, which cooling system allows for a maximum cooling performance under various operational conditions.

### Summary of the Invention

This need may be met by the subject matter according to the independent claims. Advantageous embodiments of the present invention are described by the dependent claims.

According to a first aspect of the invention there is provided a cooling system for cooling a first heat generating device and a second heat generating device. The cooling system comprises (a) a first cooling circuit comprising (a1) a first looped fluid pipe extending between a first inlet terminal and a first outlet terminal, wherein the two first terminals are configured to be connected with a first cooling mechanism of the first heat generating device, (a2) a first fluid pump being connected within the first looped fluid pipe and being configured for prompting a first heat transfer fluid to circulate within the first looped fluid pipe in a first flow direction, and (a3) a first heat exchanger being connected within the first looped fluid pipe and being configured for transferring heat from the first heat transfer fluid to a first surrounding of the first heat exchanger. The cooling system further comprises (b) a second cooling circuit comprising (b1) a second looped fluid pipe extending between a second inlet terminal and a second outlet terminal, wherein the two second terminals are configured to be connected with a second cooling mechanism of the second heat generating device, (b2) a second fluid pump being connected within the second looped fluid pipe and being configured for prompting a second heat transfer fluid to circulate within the second looped fluid pipe in a second flow direction, and (b3) a second heat exchanger being connected within the second looped fluid pipe and being configured for transferring heat from the second heat transfer fluid to a second surrounding of the second heat exchanger. The cooling system further comprises (c) a first fluid pipe bridge connecting a first downstream branch-off terminal of the first looped fluid pipe with a second downstream branch-off terminal of the second looped fluid pipe, wherein with respect to the first flow direction the first downstream branch-off terminal is arranged downstream of the first heat exchanger and with respect to the second flow direction the second downstream branch-off terminal is arranged downstream of the second heat exchanger, and (d) a second fluid pipe bridge connecting a first upstream branch-off terminal of the first looped fluid pipe with a second upstream branch-off terminal of the second looped fluid pipe, wherein with respect to the first flow direction the first upstream branch-off terminal is arranged upstream of the first heat exchanger and with respect to the second flow direction the second upstream branch-off terminal is arranged upstream of the second heat exchanger.

The described cooling system is based on the idea that by bridging the two cooling circuits an eventually existing remainder of the cooling capacity of one of the two cooling circuits can be used to support the other cooling circuit for cooling its heat generating device. This means that when not all of the cooling capacity of one of the two cooling circuits is actually needed, the free remaining cooling capacity can be added to the cooling capacity of the other one of the two cooling circuits.

Further, in some operational conditions it may also be possible to use only one of the two heat exchangers and to deactivate the other heat exchanger. Such an operation may be in particular advantageous e.g. for a wind turbine when the wind turbine is operated at low ambient temperatures (e.g. temperatures below 20°C). Using only one of the two heat exchangers may provide the advantage (i) that the efficiency of the cooling system may be increased and (ii) that during a start up phase of the whole system the temperature of the heat transfer fluid will be brought very quickly to a preferred operational temperature. As a consequence, the two heat generating devices can be operated very quickly in a preferred temperature range.

The first heat generating device and/or the second heat generating device may be any apparatus which, at least under some operational conditions, needs a cooling in order to avoid an unwanted overheating.

The heat transfer fluid may be any liquid or gaseous medium, which is capable of being heated up by the first cooling mechanism or by the second cooling mechanism and which can release heat at the first heat exchanger or at the second heat exchanger, respectively. It may also be possible that during its way through the first looped fluid pipe respectively through the second looped fluid pipe the heat transfer medium changes its state from liquid to gaseous and later from gaseous to liquid.

The first cooling mechanism and/or the second cooling mechanism may be any physical structure which allows heat being generated by the respective heat generating device to be transferred at least partially to the heat transfer fluid streaming through the respective cooling mechanism. In order allow for an efficient heat transfer the first cooling mechanism and/or the second cooling mechanism may comprise an appropriate heat exchanger.

The first heat exchanger and/or the second heat exchanger may be any physical structure which allows heat being transferred by the heat transfer medium to be released to the surrounding or to the environment of the respective heat exchanger. Thereby, the heat transfer to the surrounding or to the environment of the cooling system may be accomplished directly via a stream of ambient air through a passive cooler. However, the heat transfer to the surrounding or to the environment may also be accomplished indirectly via another heat transfer fluid streaming through a further cooling circuit.

According to an embodiment of the invention the first fluid pipe bridge comprises a first control valve for controlling the strength of a stream of heat transfer fluid flowing through the first fluid pipe bridge, and/or the second fluid pipe bridge comprises a second control valve for controlling the strength of a stream of heat transfer fluid flowing through the second fluid pipe bridge. This may provide the advantage that a thermal coupling strength between the two heat exchangers may be adjusted depending on current operational conditions of the described cooling system. Specifically, by closing at least one of the two control valves a flow of heat transfer fluid trough the respective fluid pipe bridge can be suppressed.

In other words, the provision of the control valves may allow for a precise control of the amount of heat transfer fluid which is exchanged between the two cooling circuits. As a result at least a part of the cooling capacity can be effectively exchanged between the two cooling circuits.

According to a further embodiment of the invention the cooling system further comprises a control unit being connected with the first control valve and/or with the second control valve for automatically adjusting the valve position of the first control valve and/or the valve position of the second control valve.

The control unit may be a part of or may be implemented by a control system which is used for controlling the operation of the whole cooling system. Specifically, the control system may be used for controlling the operation of the first fluid pump and/or of the second fluid pump. Further, the control unit and/or the control system may be connected with temperature sensors being arranged and being configured for sensing the temperature of the heat transfer fluid and/or the temperature at predefined locations of the described cooling system.

According to a further embodiment of the invention the first heat generating device comprises a converter for converting a first electric quantity having a first frequency into a second electric quantity having a second frequency.

The converter may be in particular a so called voltage source converter which has a DC voltage link intermediate circuit or a current source converter which has a DC current link intermediate circuit. The converter may comprise a plurality of semiconductor switches which may be part of an electrical half bridges. The cooling capability of the first cooling circuit may be in particular used for dissipating heat being generated when operating the semiconductor switches (e.g. IGBT's).

In this respect it is mentioned that one of the two frequencies may also be zero. This means that the converter is used either for rectifying an AC power signal into a DC power signal or for inverting a DC power signal into an AC power signal.

According to a further embodiment of the invention the first heat generating device additionally comprises a transformer for transforming a first AC voltage level into a second AC voltage level. This may mean that the first heat generating device effectively comprises not only one but two heat generating units which can both be cooled by the heat transfer fluid circulating through the first cooling circuit.

According to a further embodiment of the invention the second heat generating device comprises an electric generator for converting mechanical energy, in particular mechanical energy being captured by a rotor of a wind turbine, into electric energy.

The electric generator may be any arbitrary type of generator. In particular the electric generator may be a generator having a rotor being equipped with permanent magnets.

According to a further embodiment of the invention the second heat generating device additionally comprises at least one part of a nacelle of a wind turbine.

The at least one part of a nacelle may be any apparatus at or within a wind turbine nacelle, which at least under some operational conditions needs a cooling. In the embodiment described here this apparatus can be cooled together with the electric generator by means of the second cooling circuit.

According to a further embodiment of the invention the first cooling circuit further comprises (a) a bypass pipe being bypassing the first heat exchanger and (b) a heating device being connected within the bypass pipe. This may provide the advantage that the first cooling circuit could also be used for heating the first heat generating device. Such a heating procedure, which will typically be carried out only temporarily, can be used e.g. during a startup procedure to bring the first heat generating device quickly to a predefined temperature which is appropriate for an effective and/or reliable operation. When this predefined temperature has been reached, the heating device can be switched off and/or the bypass pipe can be blocked and the first cooling circuit can start its cooling operation.

This possibility to heat up the first heat generating device may be in particular advantageous when the first heat generating device comprises an electric converter having a plurality of semiconductor switches. In this case it may be necessary to bring the converter to the predefined temperature as soon as possible in order to guarantee a stable and reliable converter operation.

According to a further aspect of the invention there is provided a wind turbine for generating electrical power. The provided wind turbine comprises (a) a rotor having at least one blade, wherein the rotor is rotatable around a rotational axis and the at least one blade extends radial with respect to the rotational axis, (b) a generator being mechanically coupled with the rotor for converting mechanical power captured by the rotor into a first AC electric power signal, (c) a converter for receiving the first AC electric power signal from the generator and for converting the first AC electric power signal into a second AC electric power signal having a predefined frequency, and (d) a cooling system as set forth in any one of the preceding claims, wherein the first cooling circuit is connected to the converter and the second cooling circuit is connected to the generator.

The described wind turbine is based on the idea that a cooling system as described above can be efficiently used for cooling important components of a wind turbine. In particular components being attached to or being included within a nacelle of a wind turbine can be cooled in an efficient manner.

Specifically, depending on the operational conditions of the wind turbine one of the two or both of the two heat exchangers can be used for transferring heat from the heat transfer fluid e.g. to the ambient air of the wind turbine.

For example, under no wind or under low wind conditions (e.g. 0m/s to 4m/s) both the first heat exchanger and the second heat exchanger can be used for cooling the first heat generating device (e.g. the converter and/or the transformer) and the second heat generating device (e.g. the generator and/or the inside of the nacelle). Thereby, both heat exchangers can be realized as a so called passive cooler, where during operation ambient air is flowing through the cooler. This operational state of the cooling system may be in particular beneficial when the converter is operated in such a manner that predominantly reactive power is generated. As a consequence there may be no need for using so called active coolers (i.e. coolers having a driven fan) or, in case the first and/or the second heat exchanger is an active cooler, there may be less running hours needed for active coolers such that at the end the energy consumed by the described cooling system will be reduced.

Further, under normal operation with a low ambient temperature (e.g. smaller than 20°C) some cooling capacity of the first heat exchanger being realized as a passive converter cooler can be used for cooling the second heat generating device (e.g. the generator) because the first cooling circuit being used as the cooling system for the converter aims for a stable coolant temperature into the converter which results by passing by partly the first heat exchanger (e.g. a converter passive cooler) under low ambient temperatures. This may result in a lower temperature inside the generator which reduces heat loss and which thus increases the electric power output of the generator.

The mentioned predefined frequency may in particular correspond to the AC frequency of a power grid for receiving the electric energy generated by the wind turbine and for delivering this electric energy to consumers being connected to the power grid. The first AC power signal may have a constant AC frequency when the wind turbine is controlled in such a manner that the generator is driven with a constant rotational speed. However, preferably the wind turbine is controlled in such a manner that at least under normal operational conditions a maximal energy is captured and, as a consequence, under varying wind conditions the rotor and the generator are driven with a variable rotational speed.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine comprising a cooling system with two bridged cooling circuits.
- Figure 2: shows in an enlarged illustration the cooling system with two bridged cooling circuits.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

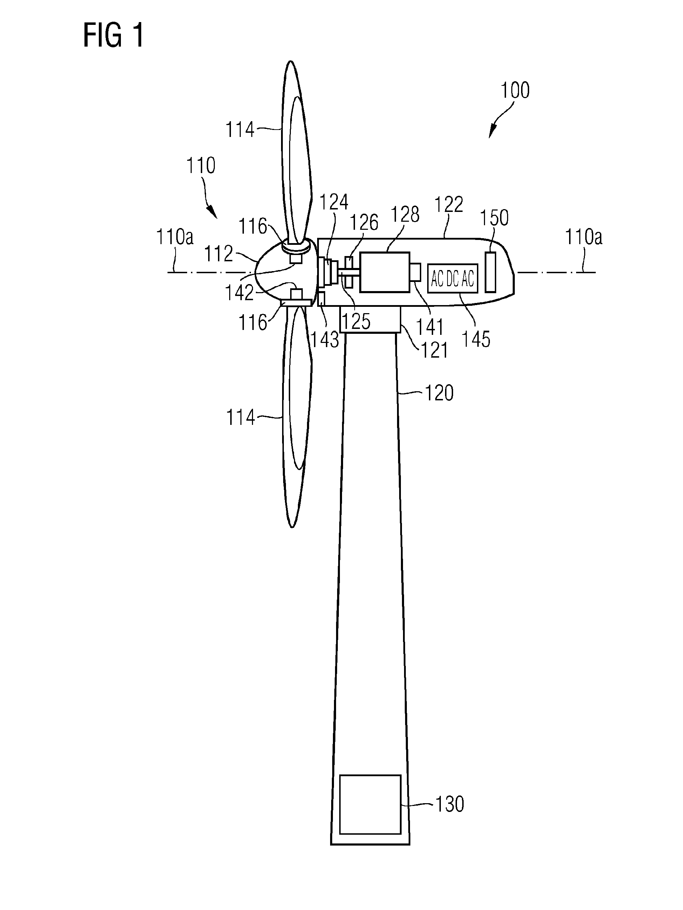

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment system 121, which is capable of rotating the nacelle 122 around a non depicted vertical axis, which is aligned with the longitudinal extension of the tower 120. By controlling the yaw angle adjustment system 121 in an appropriate manner it can be made sure, that during a normal operation of the wind turbine 100 the nacelle 122 is always properly aligned with the actual direction of the wind driving the wind turbine 100. However, for instance in order to reduce a mechanical load acting on structural components of the wind turbine the yaw angle adjustment system 121 can also be used to adjust the yaw angle to a position, wherein the nacelle 122 is intentionally not perfectly aligned with the current wind direction.

The wind turbine 100 according to the embodiment described here further comprises a rotor 110 having three blades 114. In the perspective of Figure 1 only two blades 114 are visible. The rotor 110 is rotatable around a rotational axis 110a. The blades 114, which are mounted at a driving collar 112, which is also called a hub, extend radial with respect to the rotational axis 110a.

In between the driving collar 112 and a blade 114 there is respectively provided a blade adjustment system 116 in order to adjust the blade pitch angle of each blade 114 by rotating the respective blade 114 around a non depicted axis being aligned substantially parallel with the longitudinal extension of the respective blade 114. By controlling the blade adjustment system 116 the blade pitch angle of the respective blade 114 can be adjusted in such a manner that at least when the wind is not so strong a maximum wind power can be retrieved from the available wind power. However, in order to reduce a mechanical load acting on the respective blade 114, the blade pitch angle can also be intentionally adjusted to a position, in which only a reduced power is captured from the wind driving the wind turbine 100.

As can be seen from Figure 1, within the nacelle 122 there is provided an optional gear box 124. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of the consumed fatigue life time and/or the fatigue life time consumption rate of at least one structural component of the wind turbine 100.

As can be further seen from Figure 1, the wind turbine 100 comprises a converter 145 for receiving a first AC electric power signal from the generator 128 and for converting the first AC electric power signal into a second AC electric power signal having substantially the same frequency as a power grid to which the wind turbine 100 is connected. Further, the wind turbine 100 comprises a cooling system 150, which during an operation of the wind turbine 100 is used for cooling in particular the generator 128 and the converter 145.

The wind turbine 100 further comprises a control system 130 for operating the wind turbine 100 in a highly efficient manner. Apart from controlling for instance the yaw angle adjustment system 121 the depicted control system 130 is also used for controlling the rotational speed of the rotor 110 by adjusting the blade pitch angle of the rotor blades 114 and by determining an appropriate power generation reference value for the wind turbine 100 in an optimized manner. Further, the control system 130 is used for adjusting the yaw angle of the nacelle 122 respectively of the rotor 110.

For controlling the operation of the wind turbine 100 the control system 130 is connected to a rotational speed sensor 143, which according to the embodiment described here is connected to the gear box 124. The rotational speed sensor 143 feeds a signal to the control system 130, which is indicative for the current rotational speed of the rotor 110.

Although being not essential for operating cooling system 150, the wind turbine 100 comprises (a) a power sensor 141 being connected to the generator 128 and (b) angle sensors 142, which, according to the embodiment described here, are connected to the respective blade adjustment system 116. The power sensor 141 provides information about the current power production of the wind turbine 100. The angle sensors 142 provide information about the current blade pitch angle settings of all rotor blades 114.

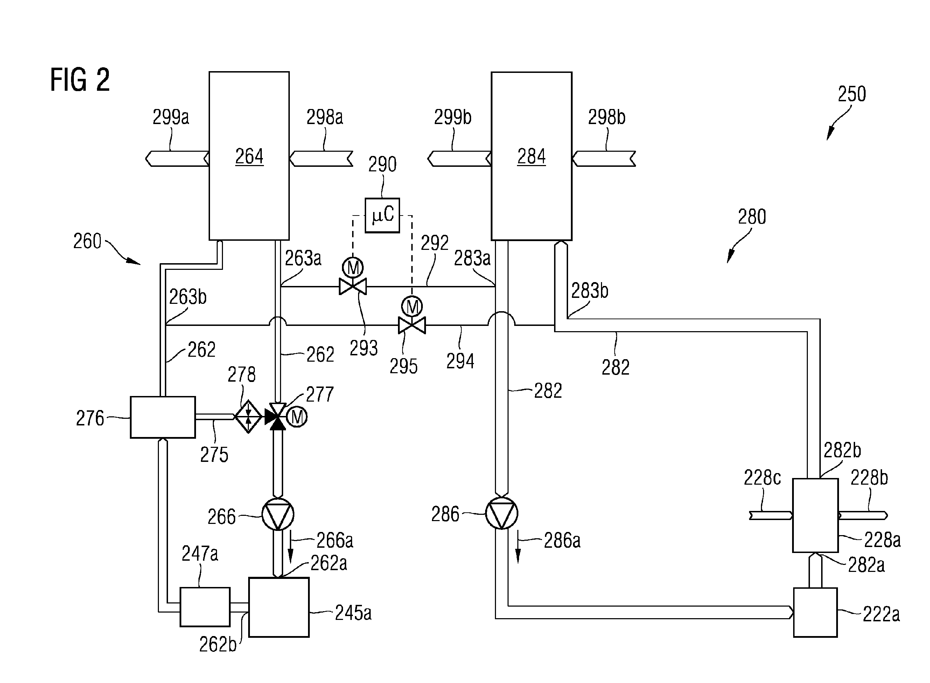

Figure 2 shows in an enlarged illustration the cooling system 150 which is now denominated with reference numeral 250. The cooling system comprises a first cooling circuit 260 and a second cooling circuit 280.

The first cooling circuit 260 comprises a first looped fluid pipe 262 extending between a first inlet terminal 262b and a first outlet terminal 262a. These two first terminals 262a and 262b are connected with a converter cooling mechanism 245a of a not depicted electric power converter. The first cooling circuit 260 further comprises a first fluid pump 266 being connected within the first looped fluid pipe 262 and being configured for prompting a first heat transfer fluid to circulate within the first looped fluid pipe 262 in a first flow direction 266a. Further, the first cooling circuit 260 comprises a first heat exchanger 264 which is connected within the first looped fluid pipe 262 and being configured for transferring heat from the first heat transfer fluid to a first surrounding of the first heat exchanger 264. According to the embodiment described here this heat transfer is accomplished with a cold inlet ambient air stream 298a streaming into the first heat exchanger 264 and a heated up outlet ambient air stream 299a streaming out from the first heat exchanger 264.

As can be seen from Figure 2, there is a transformer cooling mechanism 247a which is also connected within the first looped fluid pipe 262 and which is configured for cooling a not depicted transformer of the wind turbine. The transformer is used in a known manner for increasing the output voltage level of the converter to an input voltage level of a not depicted power grid.

According to the embodiment described here the first cooling circuit 260 further comprises an optional bypass pipe 275 extending between a three way connection 276 and a three way valve 277. An electric heater 278 is connected within the bypass pipe 275. The electric heater 278 can be used for heating up the not depicted power converter via the converter cooling mechanism 247a. Such a heating procedure may be carried out in a known manner during a startup procedure in order to bring the converter quickly to a predefined operating temperature which is appropriate for an effective and/or reliable operation. When this predefined operating temperature has been reached, the electric heater 278 can be switched off and/or the bypass pipe 275 can be blocked and the first cooling circuit 260 can start its usual cooling operation.

The second cooling circuit 280 comprises a second looped fluid pipe 262 extending between a second inlet terminal 282b and a second outlet terminal 282a. These two second terminals 282a and 282b are connected with a generator cooling mechanism 282a of a not depicted electric generator of the wind turbine. According to the embodiment described here the generator cooling mechanism 282a operates with an air stream consisting of a cold first air stream 228b being used for air-cooling the generator and a heated up second air stream 228c carrying heat which originates from the generator.

The second cooling circuit 280 further comprises a second fluid pump 286 being connected within the first looped fluid pipe 282 and being configured for prompting a second heat transfer fluid to circulate within the second looped fluid pipe 282 in a second flow direction 286a. Further, the second cooling circuit 280 comprises a second heat exchanger 284 which is connected within the second looped fluid pipe 282 and which is configured for transferring heat from the second heat transfer fluid to a second surrounding of the second heat exchanger 284. According to the embodiment described here this heat transfer is accomplished with a cold inlet ambient air stream 298b streaming into the second heat exchanger 284 and a heated up outlet ambient air stream 299b streaming out from the second heat exchanger 284.

As can be further seen from Figure 2, there is a nacelle cooling mechanism 222a which is also connected within the second looped fluid pipe 282 and which is configured for cooling the interior of a not depicted nacelle of the wind turbine.

In accordance with the basic concept of the invention described in this document the cooling system 250 comprises two fluid pipe bridges, a first fluid pipe bridge 292 and a second fluid pipe bridge 294, which interconnect the two cooling circuits 260 and 280. As can be seen from Figure 2, the first fluid pipe bridge 292 extends between a first downstream branch-off terminal 263a and a second downstream branch-off terminal 283a. Further, the second fluid pipe bridge 294 extends between a first upstream branch-off terminal 263b and a second upstream branch-off terminal 283b. Thereby, the terms "upstream" and "downstream" are used with reference to the respective heat exchanger 264, 284 and with reference to the respective flow direction 266a, 286a.

Within the first fluid pipe bridge 292 there is connected a first control valve 293. Within the second fluid pipe bridge 294 there is connected a second control valve 295. A control unit 290 being connected with the two control valves 293, 295 is used for controlling the valve positions of the two control valves 293, 295.

When opening at least partially the two control valves 293, 295 the two cooling circuits 260, 280 can be coupled with each other. Thereby, an eventually existing remainder of the cooling capacity of one of the two cooling circuits 260, 280 can be used to support the other cooling circuit 280, 260 for cooling its heat generating device. Thereby, the heat generating device of the first cooling circuit 260 is the generator and/or the transformer. Accordingly, the heat generating device of the second cooling circuit 280 is the generator and/or the interior of the nacelle. In other words, when not all of the cooling capacity of one of the two cooling circuits 260, 280 is actually needed, the free remaining cooling capacity can be added to the cooling capacity of the other one 280, 260 of the two cooling circuits 260, 280.

Further, as has already been mentioned above in some operational conditions it may also be possible to use only one of the two heat exchangers 264, 284 and to deactivate the other heat exchanger 284, 264. Such an operation may be in particular advantageous e.g. for a wind turbine when the wind turbine is operated at a low ambient temperatures (e.g. temperatures below 20°C). Using only one of the two heat exchangers may provide the advantage (i) that the efficiency of the cooling system 250 may be increased and (ii) that during a start up phase of the whole system the temperature of the heat transfer fluid will be brought very quickly to a preferred operational temperature.

With the described bridging of the two cooling circuits the following benefits could be achieved:
- At a low ambient wind speed, the use of active fans for the first heat exchangers 264 and/or for the second heat exchanger 284 can be avoided or the energy consumption of such active fans can be reduced.
- At low ambient temperature (<20°C), the "by-passed cooling capacity" of the converter cooling mechanism 245a could be additionally used for cooling the generator. This may reduce the temperature inside generator and thus increase the power output of the whole wind turbine.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A cooling system for cooling a first heat generating device (145) and a second heat generating device (128), wherein the cooling system (150, 250) comprises
- a first cooling circuit (260) comprising
a first looped fluid pipe (262) extending between a first inlet terminal (262b) and a first outlet terminal (262a), wherein the two first terminals (262a, 262b) are configured to be connected with a first cooling mechanism (245a) of the first heat generating device (145),
a first fluid pump (266) being connected within the first looped fluid pipe (262) and being configured for prompting a first heat transfer fluid to circulate within the first looped fluid pipe (262) in a first flow direction (266a), and
a first heat exchanger (264) being connected within the first looped fluid pipe (262) and being configured for transferring heat from the first heat transfer fluid to a first surrounding of the first heat exchanger (264), and
- a second cooling circuit (280) comprising
a second looped fluid pipe (282) extending between a second inlet terminal (282b) and a second outlet terminal (282a), wherein the two second terminals (282a, 282b) are configured to be connected with a second cooling mechanism (228a) of the second heat generating device (128),
a second fluid pump (286) being connected within the second looped fluid pipe (282) and being configured for prompting a second heat transfer fluid to circulate within the second looped fluid pipe (282) in a second flow direction (286a), and
a second heat exchanger (284) being connected within the second looped fluid pipe (282) and being configured for transferring heat from the second heat transfer fluid to a second surrounding of the second heat exchanger (284),
- a first fluid pipe bridge (292) connecting a first downstream branch-off terminal (263a) of the first looped fluid pipe (262) with a second downstream branch-off terminal (283a) of the second looped fluid pipe (282), wherein
with respect to the first flow direction (266a) the first downstream branch-off terminal (263a) is arranged downstream of the first heat exchanger (264) and
with respect to the second flow direction (286a) the second downstream branch-off terminal (283a) is arranged downstream of the second heat exchanger (284), and
- a second fluid pipe bridge (294) connecting a first upstream branch-off terminal (263b) of the first looped fluid pipe (262) with a second upstream branch-off terminal (283b) of the second looped fluid pipe (282), wherein
with respect to the first flow direction (266a) the first upstream branch-off terminal (263b) is arranged upstream of the first heat exchanger (264) and
with respect to the second flow direction (286a) the second upstream branch-off terminal (283b) is arranged upstream of the second heat exchanger (284).

2. The cooling system as set forth in the preceding claim, wherein
the first fluid pipe bridge (292) comprises a first control valve (293) for controlling the strength of a stream of heat transfer fluid flowing through the first fluid pipe bridge (292), and/or wherein
the second fluid pipe bridge (294) comprises a second control valve (295) for controlling the strength of a stream of heat transfer fluid flowing through the second fluid pipe bridge (294).

3. The cooling system as set forth in the preceding claim, further comprising
a control unit (290) being connected with the first control valve (293) and/or with the second control valve (295) for automatically adjusting the valve position of the first control valve (293) and/or the valve position of the second control valve (295).

4. The cooling system as set forth in any one of the preceding claims, wherein
the first heat generating device comprises a converter (145) for converting a first electric quantity having a first frequency into a second electric quantity having a second frequency.

5. The cooling system as set forth in the preceding claim, wherein
the first heat generating device additionally comprises a transformer for transforming a first AC voltage level into a second AC voltage level.

6. The cooling system as set forth in any one of the preceding claims, wherein
the second heat generating device comprises an electric generator (128) for converting mechanical energy, in particular mechanical energy being captured by a rotor of a wind turbine (100), into electric energy.

7. The cooling system as set forth in the preceding claim, wherein
the second heat generating device additionally comprises at least one part of a nacelle (122) of a wind turbine (100).

8. The cooling system as set forth in any one of the preceding claims, wherein
the first cooling circuit (260) further comprises
a bypass pipe (275) being bypassing the first heat exchanger (264) and
a heating device (278) being connected within the bypass pipe (275).

9. A wind turbine for generating electrical power, the wind turbine (100) comprising
a rotor (110) having at least one blade (114), wherein the rotor (110) is rotatable around a rotational axis (110a) and the at least one blade (114) extends radial with respect to the rotational axis (110a),
a generator (128) being mechanically coupled with the rotor (110) for converting mechanical power captured by the rotor (110) into a first AC electric power signal,
a converter (145) for receiving the first AC electric power signal from the generator and for converting the first AC electric power signal into a second AC electric power signal having a predefined frequency, and
a cooling system (150, 250) as set forth in any one of the preceding claims, wherein
the first cooling circuit (260) is connected to the converter (145) and
the second cooling circuit (280) is connected to the generator (128).
